# EUROPÄISCHE PATENTSCHRIFT

(11) **EP 1 852 328 B1**
(45) Veröffentlichungstag und Bekanntmachung des Hinweises auf die Patenterteilung: **06.04.2011**
(21) Anmeldenummer: 07007653.4
(22) Anmeldetag: 14.04.2007
(51) Int. Cl.: B62B 5/02, A61G 5/06

(54) **Transportvorrichtung mit motorisch angetriebener Treppensteigvorrichtung**
Transport device with motor driven stepping device
Dispositif de transport doté d'un dispositif pour monter les escalier actionné mécaniquement

(30) Priorität: 03.05.2006 DE 102006020313
(43) Veröffentlichungstag der Anmeldung: 07.11.2007
(73) Patentinhaber: AAT Alber Antriebstechnik GmbH, 72458 Albstadt (DE)
(72) Erfinder:
(74) Vertreter: Kohler Schmid Möbus

(56) Entgegenhaltungen:
- EP-A- 0 800 977
- EP-A- 0 903 278
- EP-A- 1 129 923
- EP-A- 1 454 811

## Beschreibung

Die Erfindung betrifft eine Transportvorrichtung mit an einem Gestell angeordneten Laufrädern, einer elektromotorisch angetriebenen Treppensteigvorrichtung, einem motorisch um eine Achse drehbar angetriebenen ersten Exzenterhebel und einem motorisch um eine Achse drehbar angetriebenen zweiten Exzenterhebel.

Eine derartige Transportvorrichtung ist aus der EP 1 129 923 A2 bekannt geworden. Bei dieser Transportvorrichtung bewegt ein Elektromotor über Kurbeln ein Steigbein auf und ab und realisiert somit den Treppensteigungsvorgang.

Eine derartige Transportvorrichtung ist ebenfalls aus der EP 1 454 811 A2 bekannt geworden. Der hierin beschriebene treppengängige Handwagen weist zwei in einem Fahrgestell gelagerte Laufräder und einen als zweiarmigen Hebel ausgeführten Stützfuß auf.

Eine derartige Transportvorrichtung mit motorisch angetriebener Treppensteigvorrichtung ist weiterhin aus der EP 0 903 278 A2 bekannt geworden. Diese Transportvorrichtung weist an einem Gestell Laufräder und eine elektromotorisch angetriebene Treppensteigvorrichtung auf, wobei der Elektromotor der Treppensteigvorrichtung erste Exzenterhebel antreibt, an denen jeweils zweite Exzenterhebel drehbar gelagert sind, die mit ihren Enden an Trägern mit an ihrem unteren Ende angeordneten Stützfüßen drehbar gelagert sind und wobei die Träger linear an der Vorrichtung geführt sind und zwischen den ersten und zweiten Exzenterhebeln Getriebe mit einem Übersetzungsverhältnis von 1:2 angeordnet sind.

Aufgabe der Erfindung ist es, eine Treppensteigvorrichtung der bekannten Art konstruktiv zu vereinfachen, das Steigbein zu stabilisieren und die Handhabung der Transportvorrichtung zu vereinfachen bzw. zu erleichtern.

Erfindungsgemäß wird die Aufgabe durch eine Transportvorrichtung der eingangs genannten Art gelöst, die dadurch gekennzeichnet ist, dass die Treppensteigvorrichtung mindestens ein teleskopierbares Steigbein aus mindestens zwei Teleskopteilen aufweist, wobei das erste Teleskopteil im Endbereich über den ersten Exzenterhebel in das zweite Teleskopteil ein- und ausfahrbar ist und das zweite Teleskopteil über den zweiten Exzenterhebel bewegbar ist.

Die erfindungsgemäße Vorrichtung hat somit den wesentlichen Vorteil, dass über die beiden Exzenterhebel das Steigbein dauerhaft und sicher geführt verschiebbar und die erfindungsgemäße Treppensteigvorrichtung über die beiden Exzenterhebel einfach konstruktiv zu realisieren ist. Durch zwei Exzenterhebel ist das Steigbein, an dem im Steigvorgang die gesamte Last der Transportvorrichtung anliegt, sicher gehalten und stabilisiert und es lassen sich über die Auslegung der Exzenter unterschiedlichste Neigungswinkel des Steigbeins zu einer Setzstufe einfachst realisieren, indem das freie Ende des Steigbeins bei einem Treppensteigvorgang von einer Treppenstufe zur nächst höher gelegenen Treppenstufe einen mehr oder weniger stark ausgeprägten elliptischen Bewegungsablauf durchführt. Selbstverständlich können mit der erfindungsgemäßen Transportvorrichtung auch Lasten von höher gelegenen Treppenstufen zu niedrigeren Treppenstufen transportiert werden.

In weiterer Ausgestaltung der Erfindung sind die Exzenterhebel synchron angetrieben. Dies vereinfacht weiterhin den konstruktiven Aufbau der erfindungsgemäßen Treppensteigvorrichtung und über den Synchronbetrieb der Exzenterhebel ist sichergestellt, dass sich das Steigbein immer im gleichen Bewegungsablauf dreht, wenn die Treppensteigvorrichtung aktiviert ist.

In allen Ausgestaltungen der Erfindung lässt sich die erfindungsgemäße Transportvorrichtung beispielsweise an Rollstühlen einfachst anbringen, sodass mit dieser Vorrichtung auch von Rollstuhlfahrerinnen und -fahrern Treppenstufen einfachst mit Hilfe einer die Transportvorrichtung führenden Person überwunden werden können. Die erfindungsgemäße Transportvorrichtung lässt sich an beliebige Vorrichtungen ankoppeln, sodass die Vorrichtungen mit der Transportvorrichtung über Treppenstufen einfachst angehoben oder abgesenkt werden können.

In weiterer Ausgestaltung der Erfindung sind die Exzenterhebel unterschiedlich lang ausgebildet. Dies hat den Vorteil, dass durch eine Kürzung des ersten Exzenterhebels im Vergleich zum zweiten Exzenterhebel eine elliptische Umlaufbahn des freien Endes des Steigbeins erreicht werden kann, die sehr lang gestreckt ist, d. h. dass die Brennpunkte einer derartigen Ellipse weit voneinander beabstandet sind. Ein Steigbein kann somit in einem sehr flachen Winkel über die Kante einer Treppenstufe gleiten. Abrupt sich ändernde Bewegungsabläufe der Transportvorrichtung beim Treppenauf- bzw. -absteigen werden vermieden.

Vorteilhaft ist es auch, wenn die Exzenterhebel mit einem einzigen Motor angetrieben werden und über einen Kettenantrieb miteinander verbunden sind. Einerseits wird dadurch die konstruktive Ausgestaltung der erfindungsgemäßen Treppensteigvorrichtung weiter vereinfacht und über den Kettenantrieb lässt sich eine Synchronisation der sich bewegenden Exzenterhebel einfachst verwirklichen.

Wird das freie Ende eines oder von mehreren Steigbeinen bei einem Steig- oder Abstiegsvorgang gerade verlaufend ausgebildet, so kann das oder die Steigbein/e kostengünstiger hergestellt werden, weil beispielsweise die Wandstärken des oder der Steigbeinrohre gegenüber Steigbeinen geringer gehalten werden, die abgewinkelt sind. In gerade verlaufend ausgebildete Steigbeine können Lasten direkt eingeleitet bzw. über diese Steigbeine abgetragen werden.

Die erfindungsgemäße Transportvorrichtung ist in einem Ausführungsbeispiel in den nachfolgenden Figuren beschrieben. Die Figuren zeigen den erfindungsgemäßen Gegenstand stark vereinfacht, damit der erfindungsgemäße konstruktive Aufbau deutlich gezeigt werden kann.

Es zeigt:
- Fig. 1: eine schematisierte Seitenansicht der erfindungsgemäßen Transportvorrichtung in einer Anfahrposition mit an einer Treppenstufe anliegenden Laufrädern;
- Fig. 2: eine Position des mindestens einen Steigbeins im Augenblick seines Aufsetzens auf eine Trittstufe;
- Fig. 3: eine schematisierte Seitenansicht der erfindungsgemäßen Transportvorrichtung während eines Treppenaufsteigvorgangs;
- Fig. 4: die erfindungsgemäße Treppensteigvorrichtung mit einem nahezu voll ausgefahrenen Teleskop-Steigbein;
- Fig. 5: die erfindungsgemäße Transportvorrichtung mit einer elektromotorisch angetriebenen Treppensteigvorrichtung in Seitenansicht kurz vor dem Aufsetzen auf der nächst höher gelegenen Treppenstufe;
- Fig. 6: die schematisierte Seitenansicht der erfindungsgemäßen Transportvorrichtung nach dem Aufsetzen auf der nächst höher gelegenen Treppenstufe und während des Nachziehens des mindestens einen Steigbeins; und
- Fig. 7: eine Seitenansicht der erfindungsgemäßen Transportvorrichtung in Ruheposition auf der nächst höher gelegenen Treppenstufe.

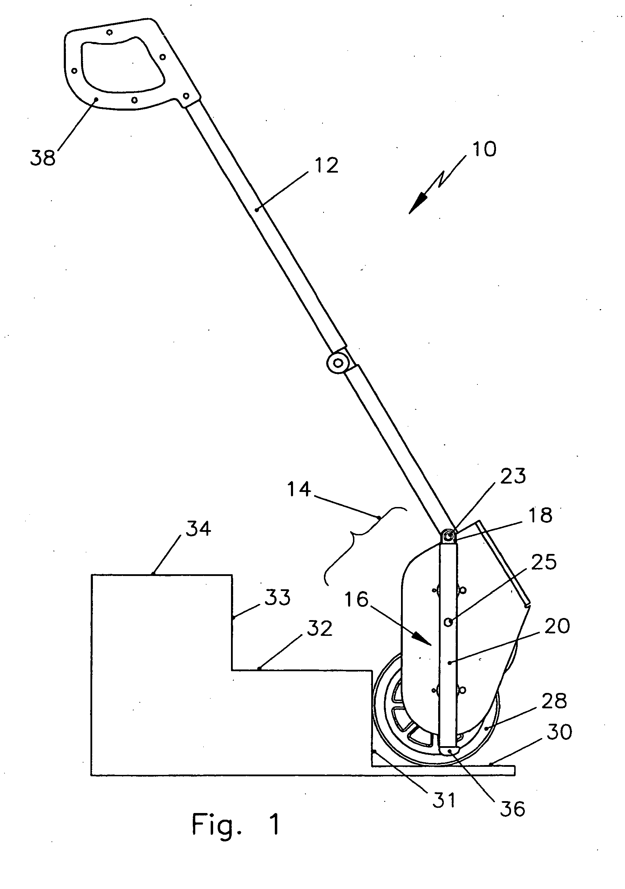

Fig. 1 zeigt mit 10 die erfindungsgemäße Transportvorrichtung in einer Seitenansicht mit einem Gestell 12, an dem eine Treppensteigvorrichtung 14 ausgebildet ist. Die Treppensteigvorrichtung 14 weist ein Steigbein 16 auf, das sich aus einem ersten Teleskopteil 18 und aus einem zweiten Teleskopteil 20 zusammensetzt. Das erste Teleskopteil 18 lässt sich in das zweite Teleskopteil 20 nahezu vollkommen einfahren. In der Fig. 1 ist das erste Teleskopteil 18 vollkommen in das zweite Teleskopteil 20 eingefahren und ausschließlich eine erste Anlenkung 23 des ersten Teleskopteils 18 an einem ersten Exzenterhebel ist in der Fig. 1 zu erkennen. Über eine zweite Anlenkung 25 ist ein zweiter Exzenterhebel an dem zweiten Teleskopteil 20 angelenkt. Die Exzenterhebel sind in der Darstellung der Fig. 1 durch das zweite Teleskopteil 20 verdeckt.

An dem Gestell 12 sind Laufräder 28 angeordnet, von denen in der Seitenansicht ein Laufrad 28 gezeigt ist. Das Laufrad 28 liegt auf der ersten Trittstufe 30 einer Treppe auf und liegt auch an der ersten Setzstufe 31 an. Mit der Transportvorrichtung 10 soll über die Treppensteigvorrichtung 14 die Transportvorrichtung 10 auf die zweite Trittstufe 32 in Überwindung einer zweiten Setzstufe 33 auf eine dritte Trittstufe 34 angehoben werden. Ein freies Ende 36 des Steigbeins 16 ist zu Beginn des Steigvorgangs von der Oberfläche der ersten Trittstufe 30 beabstandet. Über einen Handlauf 38 kann die Transportvorrichtung 10 bewegt und entsprechend ausbalanciert werden.

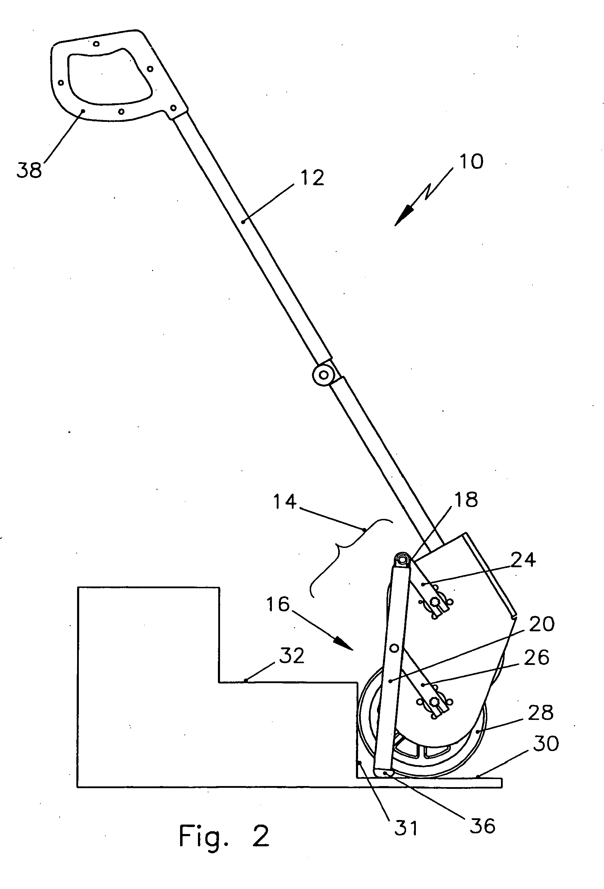

In Fig. 2 hat eine die Transportvorrichtung 10 führende Person die Treppensteigvorrichtung 14 aktiviert und das Steigbein 16 wird über den ersten Exzenterhebel 24 und den zweiten Exzenterhebel 26 gegen den Uhrzeigersinn geführt verfahren. Das freie Ende 36 des Steigbeins 16 setzt auf der Oberfläche der ersten Trittstufe 30 auf. In der gezeigten Position der Treppensteigvorrichtung 14 liegt das Laufrad 28 noch auf der ersten Trittstufe 30 auf und an der ersten Setzstufe 31 an. Das erste Teleskopteil 18 ist an den ersten Exzenterhebel 24 angelenkt und über die Drehbewegung des ersten Exzenterhebels 24 wird das erste Teleskopteil 18 geführt aus dem zweiten Teleskopteil 20 ausgefahren. Die gesamte Transportvorrichtung 10 stützt sich auch über die Anlenkung des zweiten Exzenterhebels 26 an dem Steigbein 16 ab. Über den Steigvorgang soll die Transportvorrichtung 10 auf die zweite Trittstufe 32 angehoben werden.

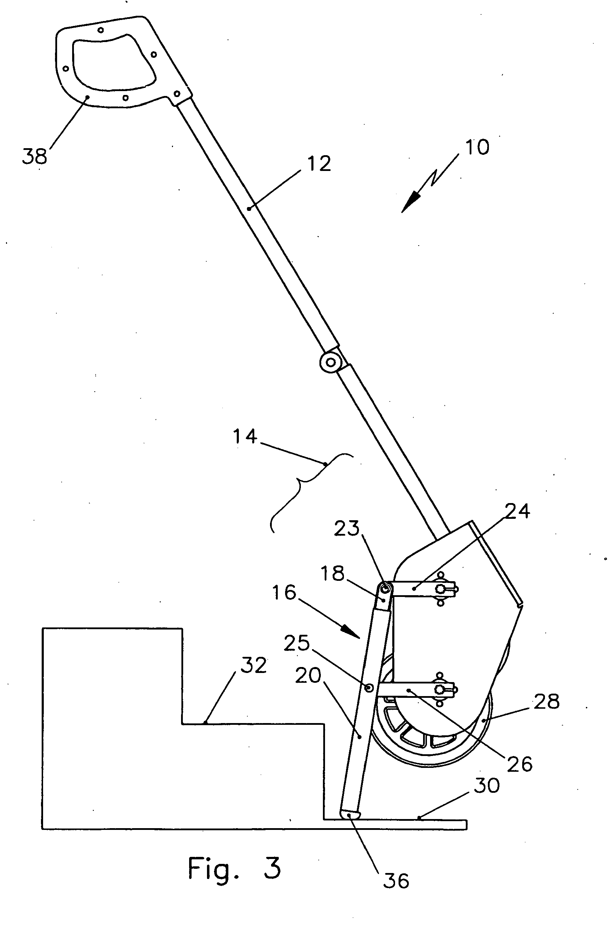

Fig. 3 zeigt die erfindungsgemäße Transportvorrichtung 10 in einer Seitenansicht, in der das Gestell 12 mit dem Laufrad 28 von der Oberfläche der ersten Trittstufe 30 abgehoben ist. Das freie Ende 36 des Steigbeins 16 stützt sich auf der Oberfläche der ersten Trittstufe 30 ab und die Exzenterhebel 24, 26 werden weiter gegen den Uhrzeigersinn um die synchron angetriebenen Achsen gedreht, sodass eine weitere Auslenkung an den Anlenkungen 23, 25 erfolgt und das erste Teleskopteil 18 weiter aus dem zweiten Teleskopteil 20 heraus verfahren wird.

Die gesamte Last der Transportvorrichtung 10, mit der daran angekoppelten, in der Figur nicht gezeigten Last, ruht in dieser Position des Steigvorgangs auf dem Steigbein 16.

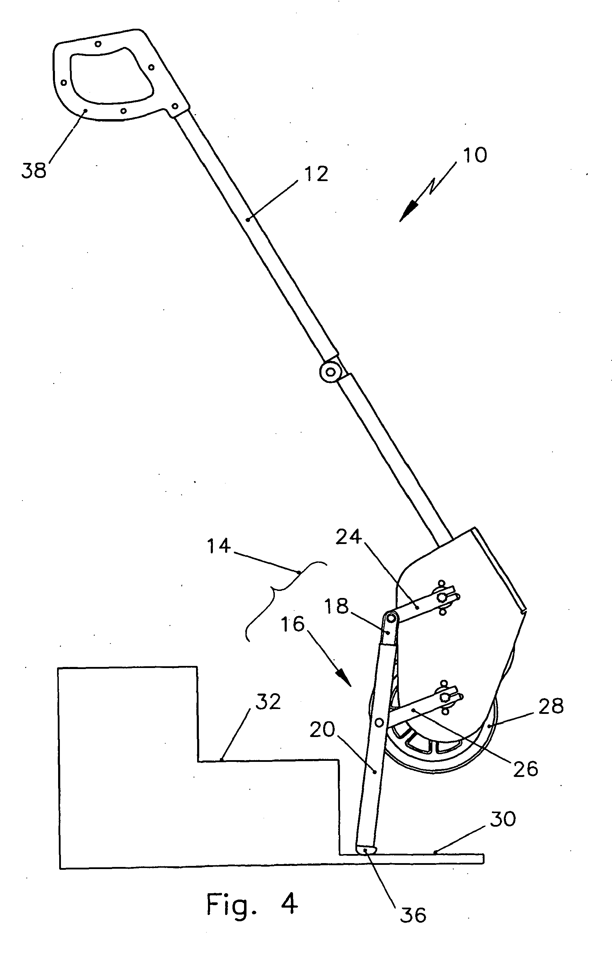

Fig. 4 zeigt die Transportvorrichtung 10 in einem weiter fortgeschrittenen Steigvorgang, in dem die Exzenterhebel 24, 26 weiter gegenüber der Stellung der Exzenterhebel 24, 26 von Fig. 3 gegen den Uhrzeigersinn verdreht sind. Das Laufrad 28 der Transportvorrichtung 10 ist noch weiter angehoben und das erste Teleskopteil 18 ist noch weiter aus dem zweiten Teleskopteil 20 herausgefahren.

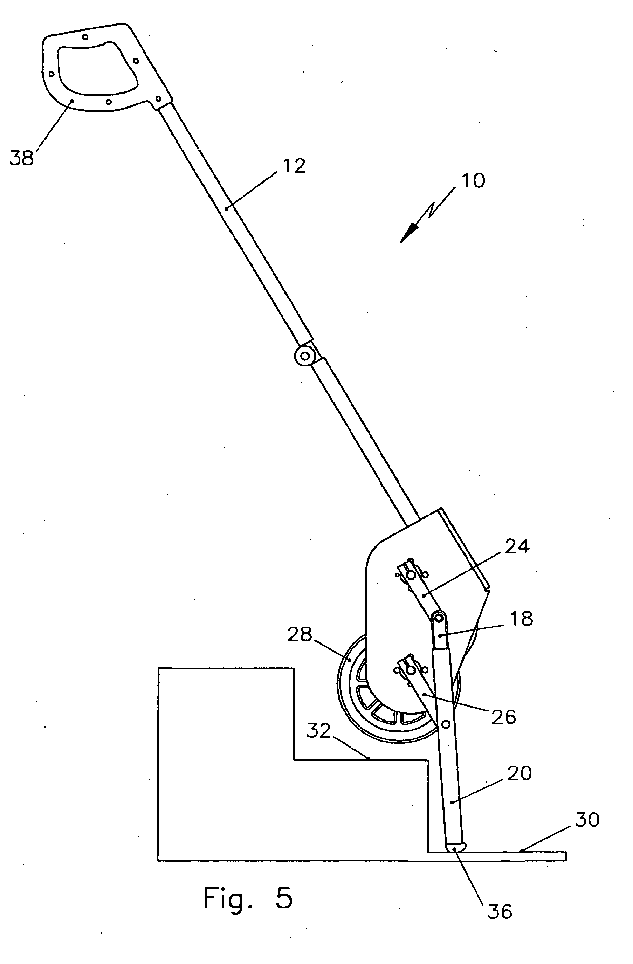

Fig. 5 zeigt die Transportvorrichtung 10 in einer Position, in der über den Handlauf 38 die Transportvorrichtung 10 auf die zweite Trittstufe 32 verschwenkt wurde. Die Exzenterhebel 24, 26 haben sich weiter gegen den Uhrzeigersinn um ihre Antriebsachsen gedreht und das erste Teleskopteil 18 ist gegenüber der Stellung in Fig. 4 noch weiter aus dem zweiten Teleskopteil 20 heraus verfahren. Das Laufrad 28 befindet sich schon in einer Position über der zweiten Trittstufe 32.

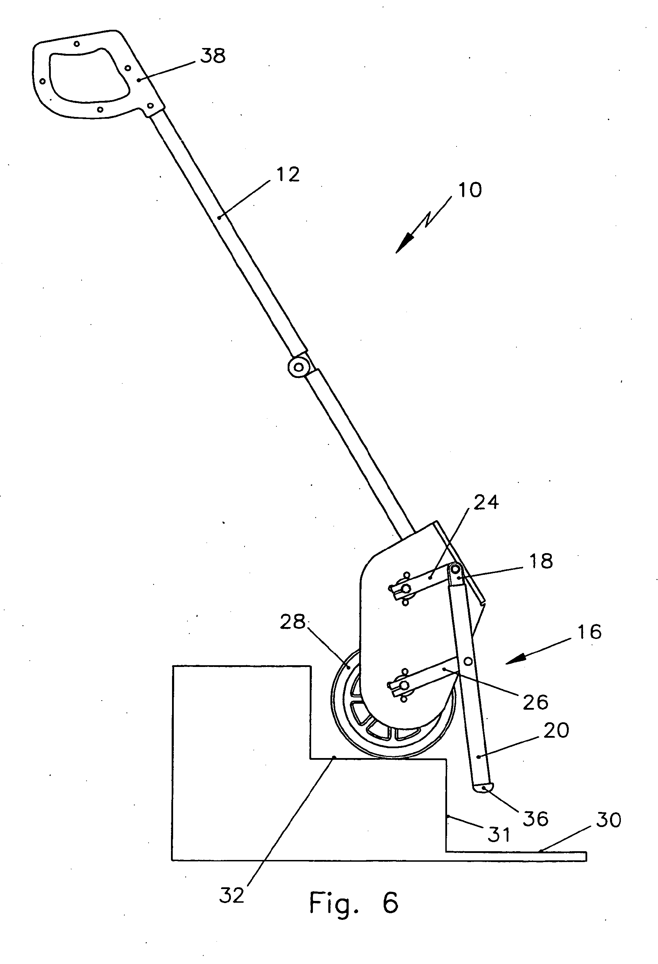

Fig. 6 zeigt die Transportvorrichtung 10 in einer Stellung, in der das Laufrad 28 auf der Oberfläche der zweiten Trittstufe 32 aufgesetzt und das Steigbein 16 mit dem freien Ende 36 von der Oberfläche der ersten Trittstufe 30 beabstandet ist. Das erste Teleskopteil 18 ist weitestgehend in das zweite Teleskopteil 20 eingefahren, in dem sich die Exzenterhebel 24, 26 weiter gegen den Uhrzeigersinn verdreht haben. Die Transportvorrichtung 10 kann nun auf der zweiten Trittstufe 32 verfahren werden. Das gerade verlaufend ausgebildete Steigbein 16 kann in einem gegenüber der ersten Setzstufe 31 vergrößerten Winkel über die Kante gezogen werden, die durch die erste Setzstufe 31 und die zweite Trittstufe 32 gebildet wird. Mit einer derartigen Ausgestaltung kann ein weitestgehender ruckfreier Steigvorgang mit der Transportvorrichtung 10 durchgeführt werden.

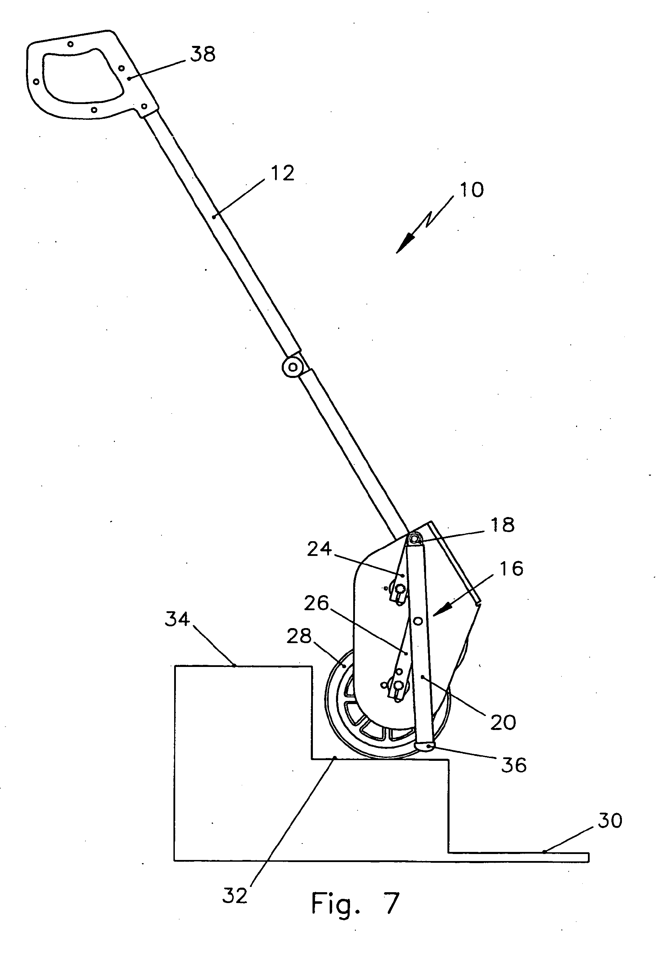

Fig. 7 zeigt die Transportvorrichtung 10, wie sie über das Laufrad 28 auf der zweiten Trittstufe 32 aufliegt und das Steigbein 16, gebildet aus den Teleskopteilen 18 , 20, ist mit dem freien Ende 36 von der Oberfläche der zweiten Trittstufe 32 beabstandet. Das Steigbein 16 wurde über die Exzenterhebel 24, 26 gegen den Uhrzeigersinn weitergeführt verschoben und das Teleskopteil 18 ist wieder vollkommen in das zweite Teleskopteil 20 eingetaucht.

Bei einer Transportvorrichtung 10 sind an einem Gestell 12 Laufräder 28 angeordnet. Die Transportvorrichtung 10 weist eine elektromotorisch angetriebene Treppensteigvorrichtung 14 auf. Die Treppensteigvorrichtung 14 weist weiterhin mindestens ein teleskopierbares Steigbein 16 auf, das aus einem ersten Teleskopteil 18 und einem zweiten Teleskopteil 20 gebildet ist. Die beiden Teleskopteile 18, 20 werden über einen ersten Exzenterhebel 24 und einen zweiten Exzenterhebel 26 geführt verschiebbar angetrieben.

## Patentansprüche

1. Transportvorrichtung mit an einem Gestell (12) angeordneten Laufrädern (28), einer elektromotorisch angetriebenen Treppensteigvorrichtung (14), einem motorisch um eine Achse drehbar angetriebenen ersten Exzenterhebel (24) und einem motorisch um eine Achse drehbar angetriebenen zweiten Exzenterhebel (26),
**dadurch gekennzeichnet, dass**
die Treppensteigvorrichtung (14) mindestens ein teleskopierbares Steigbein (16) aus mindestens zwei Teleskopteilen (18, 20) aufweist, wobei das erste Teleskopteil (18) im Endbereich über den ersten Exzenterhebel (24) in das zweite Teleskopteil (20) ein- und ausfahrbar ist und das zweite Teleskopteil (20) über den zweiten Exzenterhebel (26) bewegbar ist.

2. Transportvorrichtung nach Anspruch 1, **dadurch gekennzeichnet, dass** die Exzenterhebel (24, 26) synchron angetrieben sind.

3. Transportvorrichtung nach Anspruch 1 oder 2, **dadurch gekennzeichnet, dass** die Exzenterhebel (24, 26) unterschiedlich lang ausgebildet sind.

4. Transportvorrichtung nach einem der Ansprüche 1 bis 3, **dadurch gekennzeichnet, dass** die Exzenterhebel (24, 26) mit einem einzigen Motor angetrieben werden und über einen Kettenantrieb miteinander verbunden sind.

5. Transportvorrichtung nach einem der Ansprüche 1 bis 4, **dadurch gekennzeichnet, dass** das oder die Steigbein/e (16) gerade verlaufend ausgebildet ist/sind.

## Claims

1. A transport device consisting of wheels (28) provided on a frame (12); an electric motor driven stair-climbing device (14); a first motor driven eccentric lever (24) rotatable about an axis; and a second motor driven eccentric lever (26) rotatable about an axis,
**characterized in that**
the stair-climbing device (14) has at least one telescopic climbing leg (16) made up of at least two telescopic components (18, 20), in which case the first telescopic component (18) can be retracted into and extended from the end of the second telescopic component (20) via the first eccentric lever (24) and the second telescopic component (20) can be moved via the second eccentric lever (26).

2. A transport device according to Claim 1, **characterized in that** the eccentric levers (24, 26) are driven synchronously.

3. A transport device according to Claim 1 or 2, **characterized in that** the eccentric levers (24, 26) are formed in such a way as to have different lengths.

4. A transport device according to one of Claims 1 to 3, **characterized in that** the eccentric levers (24, 26) are driven by a single motor and are joined together via a chain drive.

5. A transport device according to one of Claims 1 to 4, **characterized in that** the climbing leg(s) (16) is/are formed in such a way as to extend in a straight line.

## Revendications

1. Dispositif de transport avec des roues mobiles (28) aménagées sur un châssis (12), un dispositif de montée de marches (14) entraîné par un moteur électrique, un premier levier excentrique (24) entraîné à rotation autour d'un axe par un moteur et un second levier excentrique (26) entraîné à rotation autour d'un axe par un moteur,
**caractérisé en ce que**
le dispositif de montée de marches (14) présente au moins un pied montant (16) télescopique constitué d'au moins deux parties télescopiques (18, 20), dans lequel la première partie télescopique (18) peut être rentrée et sortie au niveau de la zone d'extrémité via le premier levier excentrique (24) dans la seconde partie télescopique (20), et la seconde partie télescopique (20) peut être déplacée par le biais du seconde levier excentrique (26).

2. Dispositif de transport selon la revendication 1, **caractérisé en ce que** les leviers excentriques (24, 26) sont entraînés de manière synchrone.

3. Dispositif de transport selon la revendication 1 ou 2, **caractérisé en ce que** les leviers excentriques (24, 26) sont réalisés de longueur différente.

4. Dispositif de transport selon l'une quelconque des revendications 1 à 3, **caractérisé en ce que** les leviers excentriques (24, 26) sont entraînés par un unique moteur et sont reliés l'un à l'autre par le biais d'un entraînement par chaîne.

5. Dispositif de transport selon l'une quelconque des revendications 1 à 4, **caractérisé en ce que** le ou les pieds montants (16) est/sont réalisé(s) en s'étendant de manière droite.
